(19) Europäisches Patentamt
European Patent Office
Office européen des brevets

(11) Publication number: **0 159 869**
**B1**

(12) **EUROPEAN PATENT SPECIFICATION**

(45) Date of publication of patent specification: **07.09.88**

(51) Int. Cl.[4]: **C 04 B 35/00**, H 01 B 3/12, H 01 G 4/12

(21) Application number: **85302561.7**

(22) Date of filing: **12.04.85**

(54) **Ceramic compositoin for dielectric in multilayer capacitors.**

(30) Priority: **13.04.84 US 599977**

(43) Date of publication of application:
**30.10.85 Bulletin 85/44**

(45) Publication of the grant of the patent:
**07.09.88 Bulletin 88/36**

(84) Designated Contracting States:
**DE FR GB**

(56) References cited:
**DD-B- 148 045**
**FR-A-2 519 970**
**GB-A-2 126 575**
**US-A-4 027 209**
**US-A-4 379 319**

**AMERICAN CERAMIC SOCIETY BULLETIN, vol. 62, no. 2, February 1983, pages 216-218, Columbus, Ohio, US; S.-J. JANG et al.: "Low-firing capacitor dielectrics in the system Pb(Fe2/3W1/3)O3-Pb(Fe1/2Nb1/2)O3-Pb5Ge3O11**

(73) Proprietor: **UNION CARBIDE CORPORATION**
**39 Old Ridgebury Road**
**Danbury Connecticut 06817 (US)**

(72) Inventor: **Park, Hyun Duk c/o Goldstar Electric Co. Ltd.**
**Teachers Pension Fund Building 27-2 Yeoeuido-Dong**
**Youngdungpo-ku Seoul 150 (KR)**
Inventor: **Brown, Arthur English**
**215 Edgewood Drive**
**Mauldin South Carolina 29662 (US)**

(74) Representative: **Woodcraft, David Charles et al**
**BROOKES & MARTIN High Holborn House 52/54 High Holborn**
**London, WC1V 6SE (GB)**

(56) References cited:
**CHEMICAL ABSTRACTS, vol. 94, no. 5, March 1981, page 682, no. 75525z, Columbus, Ohio, US**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

EP 0 159 869 B1

**Description**

The present invention is related to ceramic compositions having a high dielectric constant and high insulation resistance at temperatures up to 85°C and which are capable of being formed by sintering a mixture of oxides at relatively low temperatures in the range of about 900 to 1050°C. More particularly, the present invention is directed to ceramic compositions particularly suited for use as the dielectric in multilayer ceramic capacitors.

Ceramic compositions using barium titanate have been used successfully as the dielectric materials for ceramic capacitors; however, such compositions require relatively high sintering temperatures e.g. 1200°C and higher, and this precludes the use of relatively inexpensive metal, such as silver and nickel, as capacitor electrodes, and mandates the use of higher melting, expensive precious metals, such as platinum.

Recently, lead oxide-based perovskite dielectric systems have been proposed to achieve low sintering temperatures while providing a relatively high dielectric constant and insulation resistance, for example, US—A—4,216,102 to Furukawa *et al.* Such prior art lead oxide-based solid solution systems provide significant advantages, however, there remains the need to provide high dielectric constants with increased temperature dependence stability and higher insulation resistance at high temperatures, more comparable to barium titanate base dielectrics.

According to the present invention there is provided a lead oxide-base dielectric ceramic material having a dielectric constant of at least 10,000 at 25°C and 10000 (+22% to −56%) over the temperature range of 10—85°C and insulation resistance of at least $10^{12}$ ohm-cm at 25°C and $10^{11}$ ohm-cm at 85°C which is formed from a sintered mixture of oxide powders and has a microstructure comprising a predominantly lead perovskite solid solution phase surrounding small discrete regions of metal oxide residues, said ceramic material comprising by weight,

64.32 to 66.20% of PbO
2.49 to 6.67% $Fe_2O_3$
24.18 to 28.14% $Nb_2O_5$
2.09 to 3.59% MgO
0.025 to 0.10% $MnO_2$
0.20 to 1.50% of one or more of the following oxides: $GeO_2$, $SiO_2$, $Bi_2O_3$, CdO, ZnO, $Al_2O_3$, CuO and $B_2O_3$,

and having an atomic ratio of Pb to the sum of Nb, Fe and Mg of from 0.893 to 0.913 and a weight ratio of MgO to $Fe_2O_3$ of from 0.34 to 1.3.

The present invention further provides a method of forming a lead-oxide based dielectric ceramic material which comprises:

milling and calcining PbO, $Nb_2O_5$, MgO, $MnO_2$ and $Fe_2O_3$ or precursor salts in air at a temperature of from 720 to 780°C,

providing an oxidic sintering aid material selected from one or more of $GeO_2$, $SiO_2$, $Bi_2O_3$, CdO, ZnO, $Al_2O_3$, CuO and $B_2O_3$ chemically combined with at least 20% by weight of PbO, to form a sintering aid additive having a melting point of not more than 775°C, and a resistivity at 25°C of at least $10^{13}$ ohm-cm,

blending the calcined mixture and sintering aid additive in proportions such as to produce a sintered ceramic material containing the following composition:—

64.32 to 66.20% PbO
2.49 to 6.67% $Fe_2O_3$
24.18 to 28.14% $Nb_2O_5$
2.09 to 3.59% MgO
0.025 to 0.10% $MnO_2$
0.20 to 1.5% of one or more of the oxides $GeO_2$, $SiO_2$, $Bi_2O_3$, CdO, ZnO, $Al_2O_3$, CuO and $B_2O_3$

said ceramic material having an atomic ratio of Pb to the sum of Nb, Fe and Mg of from 0.893 to 0.913 and a weight ratio of MgO to $Fe_2O_3$ of from 0.34 to 1.3,

and sintering the mixture at a temperature of from 900 to 1050°C.

Other features of the present invention will be apparent from the following description taken in conjunction with the drawings wherein:

Figure 1 shows a photomicrographic (original magnification 570×) of the microstructure of a multilayer capacitor having a dielectric of sintered ceramic material in accordance with the present invention.

Figures 2a, b and c are graphs showing the dielectric constant and insulation resistance values obtained from various ceramic compositions.

Figure 3 shows the relationship between the starting lead oxide compositions and the final compositions of dielectrics of this invention.

Figure 4 is a graph showing insulation resistance as a function of temperature for various lead oxide-based dielectric materials, and

Figure 5 is a graph showing temperature dependence characteristics of the lead-oxide-based dielectric of the present invention.

The ceramic composition used in the present invention is characterised by being sinterable at temperatures in the range of 900 to 1050°C and providing a dielectric constant (K) of at least 10,000 at 25°C and 10,000 (+22% to −56%) over the range of 10—85°C and insulation resistance of at least $10^{12}$ ohm-cm at 25°C and $10^{11}$ ohm-cm at 85°C. These characteristics satisfy EIA standard RS-198-C for Z5U capacitors (Electric Industries Association—November 1983).

The relative low PbO content is particularly important to the achievement of high dielectric constant as are the relationships recited with respect to Pb, Fe, Mg and Nb. The relatively minor amounts of $MnO_2$ and of the sintering aid additives enables optimum densification of the dielectric, and enhance the insulation resistance, especially at high temperatures (e.g. 85°C). Further, these additives in combination result in the insulation resistance remaining high during capacitor life testing under high temperature and voltage stresses.

In the practice of the present invention, a blended mixture of finely divided particles of PbO, MgO, $Fe_2O_3$ and $Nb_2O_5$ is provided in appropriate proportions and manganese, e.g. in the form of a manganese-containing salt such as manganous nitrate or acetate, is added to provide the desired $MnO_2$ content in the sintered ceramic, and the mixture is calcined at about 720 to 780°C for about 60 to 180 minutes in an air atmosphere. The resulting calcine material is milled to a size of about 0.6 micronmeter and blended with finely divided (e.g. ~1 micronmeter) oxide sintering aid additive, in the amount of about 1—3% by weight of the calcine. Suitable sintering aid materials include $Pb_5Ge_{1.95}Si_{1.05}O_{11}$, (melting point 720°C, resistivity $>10^{13}$ ohm-cm) and lead-containing glasses such as compositions A and B in Table A, below.

TABLE A
Sintering aids

| | A | B |
|---|---|---|
| PbO | 61.6 | 24.8 (wt.%) |
| CdO | — | 35.5 |
| $Bi_2O_3$ | 2.4 | 24.5 |
| $B_2O_3$ | 14.5 | 5.2 |
| $SiO_2$ | 2.5 | 4.9 |
| ZnO | 15.2 | 4.0 |
| $Al_2O_3$ | — | 1.0 |
| CuO | 3.8 | — |
| M.P. | 500°C | 700°C |
| Resistivity | $>10^{13}$ ohm-cm | $>10^{13}$ ohm-cm |

The mixture thus obtained is sintered at 900 to 1050°C for about 60 to 180 minutes in the course of which the calcine and the sintering aid constituents react to provide a reaction product characterised by a microstructure comprising a predominantly lead perovskite solid solution phase surrounding discrete regions of sintering aid metal oxide residues. A representative microstructure (original magnification 750×) is shown in Figure 1. The microstructure shown in Figure 1 was determined using scanning electron microscopy. The chemical compositions of the phases, to the degree that they were determined, were analysed by energy-dispersive X-ray analysis. The crystal structure of the major phase (perovskite) was determined by X-ray diffraction. In Figure 1, 1 indicates generally the dielectric composition of the invention, and 2 is a capacitor electrode typically made of silver containing 5 to 25 wt.% palladium. The lead-containing perovskite phase of the dielectric composition is indicated at 3. The dark regions 4 surrounded by the perovskite dielectric phase 3 are sintering aid metal oxide residues, $SiO_2$ and $GeO_2$.

Ceramic dielectric material in accordance with the present invention is used as the dielectric for multilayer ceramic capacitors following conventional practice and using relatively inexpensive metals such as silver and its alloys as the electrode material.

The following example will further illustrate the present invention:

Example

A calcine material was prepared from the following:

| | | |
|---|---|---|
| PbO | sized 4.5 micronmeter | mean particle size as determined by the Sedigraph™ technique. |
| $MgCO_3$ | sized 3 micronmeter | |
| $Fe_2O_3$ | sized 0.5 micronmeter | |
| $Nb_2O_3$ | sized 3 micronmeter | |

The materials were milled, dried and calcined at 750°C, for 120 minutes.

In some instances, $Mn(NO_3)_2$ was added to the mixture before calcining to provide a desired $MnO_2$ content in the calcine and, in further instances, oxidic sintering aid material was added after calcining to provide a desired sintering aid content.

Materials as above described were sintered at 965 to 1050°C for about 120 minutes to obtain a dense ceramic, and conventional practices to make multilayer ceramic capacitors were followed.

The multilayer capacitors had individual dielectric layers of about 1.2 mils (30.5 µm) thickness and a total capacitance of about 1 microfarad (for a dielectric constant of 10,000).

The fired dielectric compositions are shown in Table I and the dielectric properties are listed in Table II. The data from Table II are plotted in Figures 2a, b and c and Figure 4. Samples A—H, not in accordance with the present invention, reflect the known behavior of lead magnesium iron niobate as described in US—A—4,216,102 and elsewhere in the prior art. That is, as the PbO content approaches the stoichiometric value of about 68.25 wt.% for

$$0.35\ Pb(Fe_{1/2}Nb_{1/2})O_3 \cdot 0.65\ Pb(Mg_{1/3}Nb_{2/3})O_3$$

the dielectric constant and the insulation resistance of the material both increase sharply (Samples A—H as shown in Figures 2(a)—(c) and Table (II). Sample I was made generally in accord with the present invention, but with an incorrect ratio of Pb/Nb+Mg+Fe. The presence of $MnO_2$ (compare series E—H with A—D) increases the insulation resistance of the composition when the PbO content is near its stoichiometric value. In sharp contrast, the compositions of this invention (Samples J, K, L) exhibit a high dielectric constant and very high insulation resistance at a significantly substoichiometric PbO content, at which other formulations exhibit low dielectric constants and very low insulation resistances, particularly at high temperatures, as can be seen in Figures 2(c) and Figure 4.

Figure 4 is a graph showing insulation resistance as a function of temperature for the materials of the example. As can be seen, the materials J, K, L in accordance with the present invention are superior.

Figure 5 is a graph showing dielectric constant change with temperature for materials in accordance with the present invention.

As can be seen, the temperature dependence of the dielectric constant is very good and well within the specification for Z5U-type capacitors as established by Electric Industries Association Standard RS-198-C (November 1983).

A significant aspect of the formulations of this invention is the manner in which they can be sintered. The usual practice is to sinter PbO containing perovskites in closed crucibles often with lead-containing "atmosphere powders" near the bodies to minimize lead loss. In the practice of the present invention sintering can be accomplished in open containers such as those used to make barium titanate multilayer capacitors, using an excess of PbO. PbO loss from the dielectric during sintering results in the achievement of the desired PbO content. Figure 3 shows the PbO content for the presintered mixture and sintered compositions for samples J, K, L of the present invention. A relatively wide range of initial high PbO contents results in a narrow range of final composition in accordance with the present invention. It is usually desirable, however, to use starting compositions which are relatively low in PbO content as illustrated in Figure 3 to minimize the amount of PbO which is evaporated from the body. Variations in the Fe and Mg contents and sintering aid content additive affect somewhat the value of the final PbO content and can be used to adjust the temperature coefficient of capacitance and sintering behaviour of the dielectric.

TABLE I

| Sample | PbO | $Fe_2O_3$ | MgO | $Nb_2O_5$ | $MnO_2$ | Germanium oxide plus silicon oxide | Sintering temp. (°C) | Atomic ratio $\frac{Pb}{Fe+Mg+Nb}$ |
|---|---|---|---|---|---|---|---|---|
| A | 64.26 | 4.82 | 3.02 | 27.91 | — | — | 1050 | .834 |
| B | 65.75 | 4.62 | 2.90 | 26.75 | — | — | 1050 | .890 |
| C | 67.53 | 4.38 | 2.74 | 25.35 | — | — | 1060 | .965 |
| D | 68.24 | 4.28 | 2.68 | 24.81 | — | — | 1060 | .997 |
| E | 64.15 | 4.83 | 3.02 | 27.94 | 0.05 | — | 1050 | .832 |
| F | 64.34 | 4.59 | 2.87 | 26.56 | 0.05 | — | 1050 | .886 |
| G | 67.53 | 4.37 | 2.74 | 25.31 | 0.05 | — | 1050 | .966 |
| H | 68.87 | 4.28 | 2.62 | 24.26 | 0.05 | — | 1050 | 1.028 |
| I | 65.38 | 4.62 | 2.89 | 26.70 | 0.06 | 0.40 | 1025 | .886 |
| J | 65.65 | 4.57 | 2.86 | 26.46 | 0.05 | 0.40 | 1025 | .899 |
| K | 65.75 | 4.56 | 2.85 | 26.37 | 0.05 | 0.41 | 1025 | .903 |
| L | 65.61 | 4.58 | 2.85 | 26.48 | 0.05 | 0.43 | 1025 | .898 |
| M | 67.50 | 4.33 | 2.71 | 25.05 | — | 0.40 | 975 | .976 |

TABLE II

| Sample | PbO Content (wt.%) | K 25°C | IR 25°C Ω −F | IR 85°C Ω −F |
|---|---|---|---|---|
| A | 64.26 | 1690 | 56 | v. low |
| B | 65.75 | 4020 | 132 | low |
| C | 67.53 | 12500 | 1000 | — |
| D | 68.24 | 15440 | 2430 | 71 |
| E | 64.15 | 2335 | 18 | v. low |
| F | 65.94 | 6210 | 175 | low |
| G | 67.53 | 9430 | 4430 | 44 |
| H | 68.87 | 12740 | 14590 | 560 |
| I | 65.33 | 7235 | 5990 | 52 |
| J | 65.65 | 11300 | 14500 | 1450 |
| K | 65.75 | 11500 | 21000 | 1679 |
| L | 65.61 | 12800 | 16730 | 1673 |
| M | 67.50 | 7650 | 2066 | 455 |

**Claims**

1. A lead oxide-base dielectric ceramic material having a dielectric constant of at least 10,000 at 25°C and 10000 (+22% to −56%) over the temperature range 10—85°C and insulation resistance of at least $10^{12}$ ohm-cm at 25°C and $10^{11}$ ohm-cm at 85°C which is formed from a sintered mixture of oxide powders and has a microstructure comprising a predominantly lead perovskite solid solution phase surrounding small discrete regions of metal oxide residues, said ceramic material comprising by weight,

64.32 to 66.20% of PbO
2.49 to 6.67% $Fe_2O_3$
24.18 to 28.14% $Nb_2O_5$
2.09 to 3.59% MgO
0.025 to 0.10% $MnO_2$
0.20 to 1.50% of one or more of the following oxides: $GeO_2$, $SiO_2$, $Bi_2O_3$, CdO, ZnO, $Al_2O_3$, CuO and $B_2O_3$,

and having an atomic ratio of Pb to the sum of Nb, Fe and Mg of from 0.893 to 0.913 and a weight ratio of MgO to $Fe_2O_3$ of from 0.34 to 1.3.

2. A method of forming a lead-oxide based dielectric ceramic material which comprises:

milling and calcining PbO, $Nb_2O_5$, MgO, $MnO_2$ and $Fe_2O_3$ or precursor salts in air at a temperature of from 720 to 780°C,

providing an oxidic sintering aid material selected from one or more of $GeO_2$, $SiO_2$, $Bi_2O_3$, CdO, ZnO, $Al_2O_3$, CuO and $B_2O_3$ chemically combined with at least 20% by weight of PbO, to form a sintering aid additive having a melting point of not more than 775°C, and a resistivity at 25°C of at least $10^{13}$ ohm-cm,

blending the calcined material and sintering aid additive in proportions such as to produce a sintered ceramic material containing the following composition:—

2.49 to 6.67% $Fe_2O_3$
24.18 to 28.14% $Nb_2O_5$
2.09 to 3.59% MgO
0.025 to 0.10% $MnO_2$
0.20 to 1.5% of one or more of the oxides
$GeO_2$, $SiO_2$, $Bi_2O_3$, CdO, ZnO, $Al_2O_3$, CuO and $B_2O_3$
64.32 to 66.20% PbO

said ceramic material having an atomic ratio of Pb to the sum of Nb, Fe and Mg of from 0.893 to 0.913 and a weight ratio of MgO to $Fe_2O_3$ of from 0.34 to 1.3, and sintering the mixture at a temperature of from 900 to 1050°C.

3. A multilayer capacitor which comprises dielectric layers formed from the material claimed in claim 1 separated by metal electrodes.

4. A capacitor according to claim 3 wherein the electrodes are formed from silver or an alloy thereof.

**Patentansprüche**

1. Dielektrisches keramisches Material auf der Basis von Bleioxid mit einer Dielektrizitätskonstante von wenigstens 10.000 bei 25°C und 10.000 (+22% bis −56%) über den Temperaturbereich von 10—85°C und einem Isolationswiderstand von wenigstens $10^{12}$ Ohm-cm bei 25°C und $10^{11}$ Ohm-cm bei 85°C, das aus einem gesinterten Gemisch von Oxidpulvern gebildet ist und eine Mikrostruktur aufweist, die eine Phase fester Lösung von überwiegend Bleiperovskit aufweist, die kleine diskrete Bereiche von Metalloxidresten umgibt, wobei das keramische Material, bezogen auf das Gewicht, aufweist

64,32 bis 66,20% PbO,
2,49 bis 6,67% $Fe_2O_3$,
24,18 bis 28,14% $Nb_2O_5$,
2,09 bis 3,59% MgO,
0,025 bis 0,10% $MnO_2$,
0,20 bis 1,50% eines oder mehrere der folgenden Oxide: $GeO_2$, $SiO_2$, $Bi_2O_3$, CdO, ZnO, $Al_2O_3$, CuO und $B_2O_3$,

und ein atomares Verhältnis von Pb zur Summe von Nb, Fe und Mg von 0,893 bis 0,913 und ein Gewichtsverhältnis von MgO zu $Fe_2O_3$ von 0,34 bis 1,3 aufweist.

2. Verfahren zur Herstellung eines dielektrischen keramischen Materials auf der Basis von Bleioxid, bei dem man PbO, $Nb_2O_5$, MgO, $MnO_2$ und $Fe_2O_3$ oder Präkursorsalze in Luft bei einer Temperatur von 720 bis 780°C mahlt und kalziniert,

als oxidisches Sinterhilfsmaterial $GeO_2$, $SiO_2$, $Bi_2O_3$, CdO, ZnO, $Al_2O_3$, CuO und/oder $B_2O_3$, chemisch kombiniert mit wenigstens 20 Gewichtsprozent PbO, einsetzt, um einen Sinterhilfszusatz mit einem Schmelzpunkt von nicht mehr als 775°C und einem Widerstand bei 25°C von wenigstens $10^{13}$ Ohm-cm zu bilden,

das kalzinierte Gemisch und den Sinterhilfszusatz in derartigen Verhältnissen vermischt, daß ein gesintertes keramisches Material mit folgender Zusammensetzung hergestellt wird:

2,49 bis 6,67% $Fe_2O_3$,
24,18 bis 28,14% $Nb_2O_5$,
2,09 bis 3,59% MgO,
0,025 bis 0,10% $MnO_2$,
0,20 bis 1,5% eines oder mehrerer Oxide:
$GeO_2$, $SiO_2$, $Bi_2O_3$, CdO, ZnO
$Al_2O_3$, CuO und $B_2O_3$,
64,32 bis 66,20% PbO,

wobei das keramische Material ein atomares Verhältnis von Pb zur Summe von Nb, Fe und Mg von 0,893 bis 0,913 und ein Gewichtsverhältnis von MgO zu $Fe_2O_3$ von 0,34 bis 1,3 aufweist, und das Gemisch bei einer Temperatur von 900 bis 1050°C sintert.

3. Vielschichtiger Kondensator, der dielektrische Schichten aufweist, die aus dem Material gebildet sind, das in Anspruch 1 beansprucht ist, und die durch Metallelektroden getrennt sind.

4. Kondensator nach Anspruch 3, bei dem die Elektroden aus Silber oder einer Legierung hiervon gebildet sind.

**Revendications**

1. Matière céramique diélectrique à base d'oxyde de plomb, ayant une constante diélectrique d'au moins 10 000 à 25°C et 10 000 (+22% à −56%) dans la plage de températures allant de 10 à 85°C et une résistance d'isolement d'au moins $10^{12}$ ohms-cm à 25°C et $10^{11}$ ohms-cm à 85°C, qui est formée d'un mélange fritté de poudres d'oxydes et possède une micro-structure comprenant une phase de solution solide de pérovskite de plomb prédominante entourant de petites régions discrètes de résidus d'oxydes métalliques, ladite matière céramique comprenant, en poids,

64,32 à 66,20% de PbO
2,49 à 6,67% de $Fe_2O_3$
24,18 à 28,14% de $Nb_2O_5$
2,09 à 3,59% de MgO
0,025 à 0,10% de $MnO_2$
0,20 à 1,50% d'un ou plusieurs des oxydes suivants: $GeO_2$, $SiO_2$, $Bi_2O_3$, CdO, ZnO, $Al_2O_3$, CuO et $B_2O_3$,

et ayant un rapport atomique de Pb à la somme de Nb, Fe et Mg allant de 0,893 à 0,913 et un rapport pondéral de MgO à $F_2O_3$ allant de 0,34 à 1,3.

2. Procédé de formation d'une matière céramique diélectrique à base d'oxyde de plomb, qui consiste:

à broyer et calciner PbO, $Nb_2O_5$, MgO, $MnO_2$ et $Fe_2O_3$, ou des sels servant de précurseurs, à l'air à une température de 720 à 780°C,

à préparer une matière servant d'adjuvant de frittage oxydant, choisie entre un ou plusieurs des composés du groupe comprenant $GeO_2$, $SiO_2$, $Bi_2O_3$, CdO, ZnO, $Al_2O_3$, CuO et $B_2O_3$, combinés chimiquement avec au moins 20% en poids de PbO, pour former un additif servant d'adjuvant de frittage ayant un point de fusion non supérieur à 775°C, et une résistivité à 25°C d'au moins $10^{13}$ ohms-cm,

à mélanger le mélange calciné et l'additif servant d'adjuvant de frittage en des proportions choisies de manière à produire une matière céramique frittée ayant la composition suivante:

2,49 à 6,67% de $Fe_2O_3$
24,18 à 28,14% de $Nb_2O_5$
2,09 à 3,59% de MgO
0,025 à 0,10% de $MnO_2$
0,20 à 1,5% de l'un ou plusieurs des oxydes suivants: $GeO_2$, $SiO_2$, $Bi_2O_3$, CdO, ZnO, $Al_2O_3$, CuO et $B_2O_3$ 64,32 à 66,20% de PbO

ladite matière céramique ayant un rapport atomique de Pb à la somme de Nb, Fe et Mg allant de 0,893 à 0,913 et un rapport pondéral de MgO à $Fe_2O_3$ allant de 0,34 à 1,3, et à effectuer le frittage du mélange à une température allant de 900 à 1050°C.

3. Condensateur multi-couches, qui comprend des couches diélectriques formées de la matière suivant la revendication 1, séparées par des électrodes métalliques.

4. Condensateur suivant la revendication 3, dans lequel les électrodes sont formées d'argent ou d'un de ses alliages.

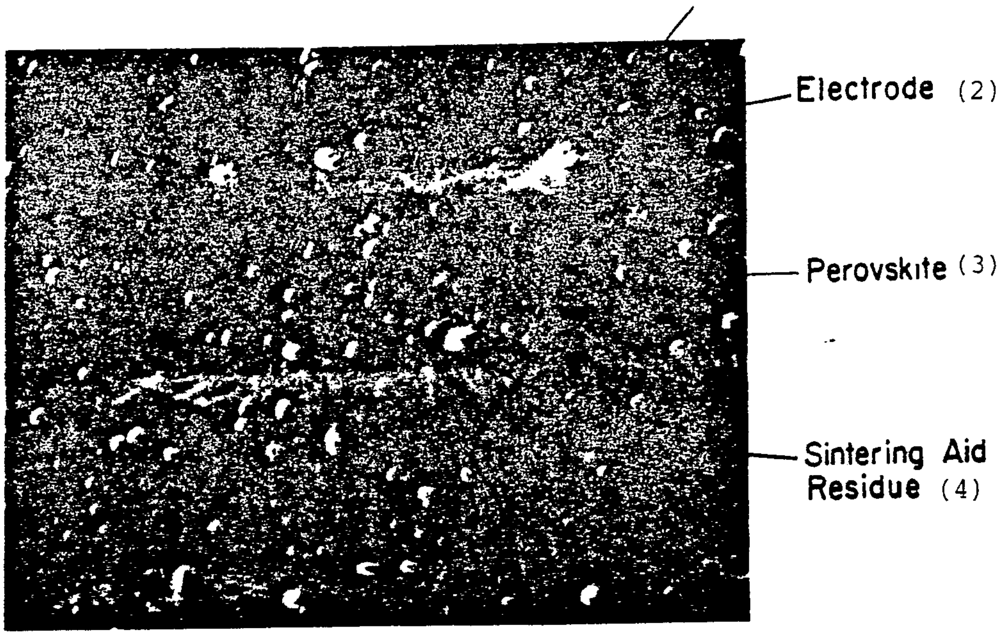
Dielectric (1)
Electrode (2)
Perovskite (3)
Sintering Aid Residue (4)

F I G. 1

FIG. 2a

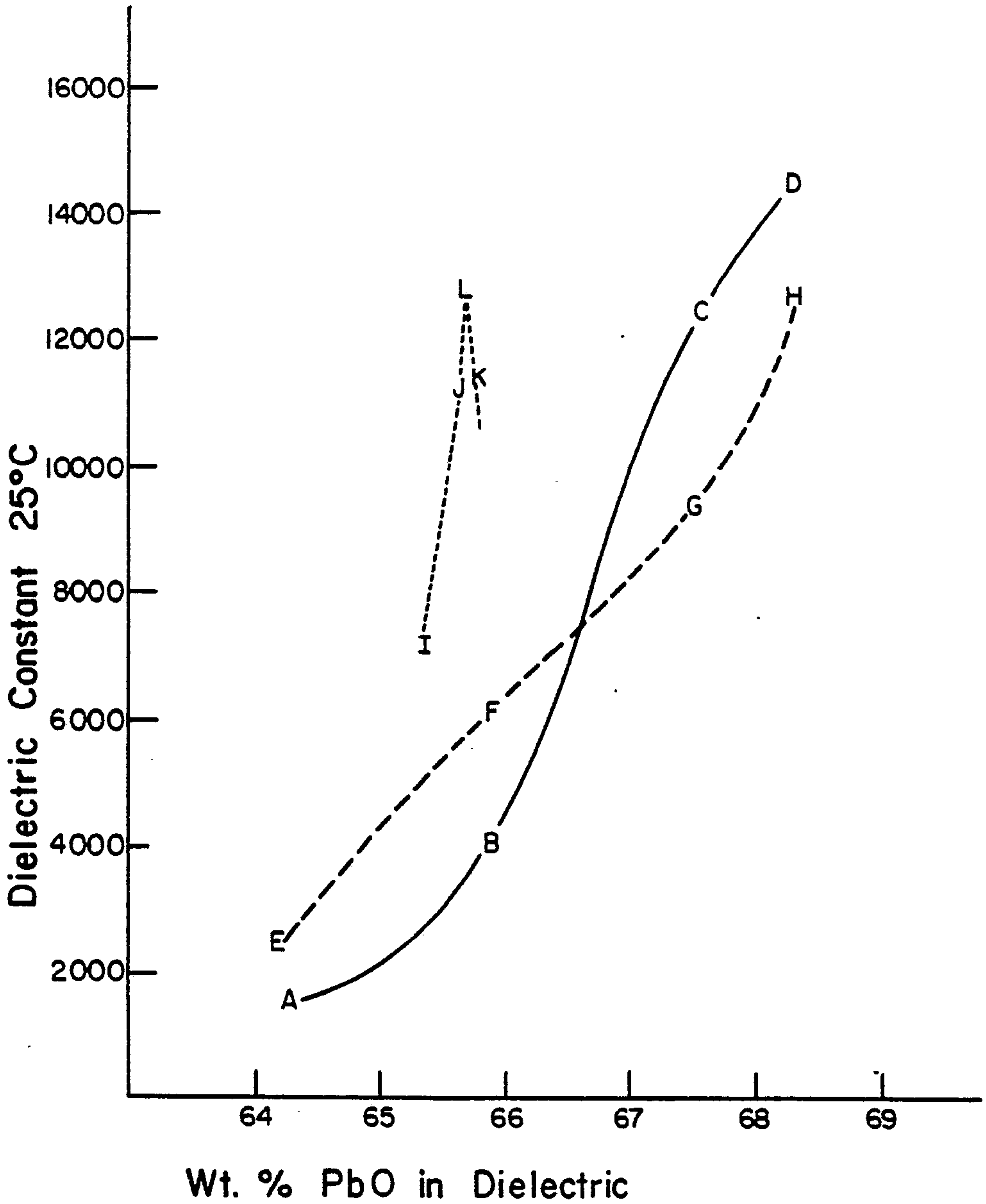
16000
14000
12000
10000
8000
6000
4000
2000
Dielectric Constant 25°C
A
B
C
D
E
F
G
H
I
J
K
L
64
65
66
67
68
69
Wt. % PbO in Dielectric

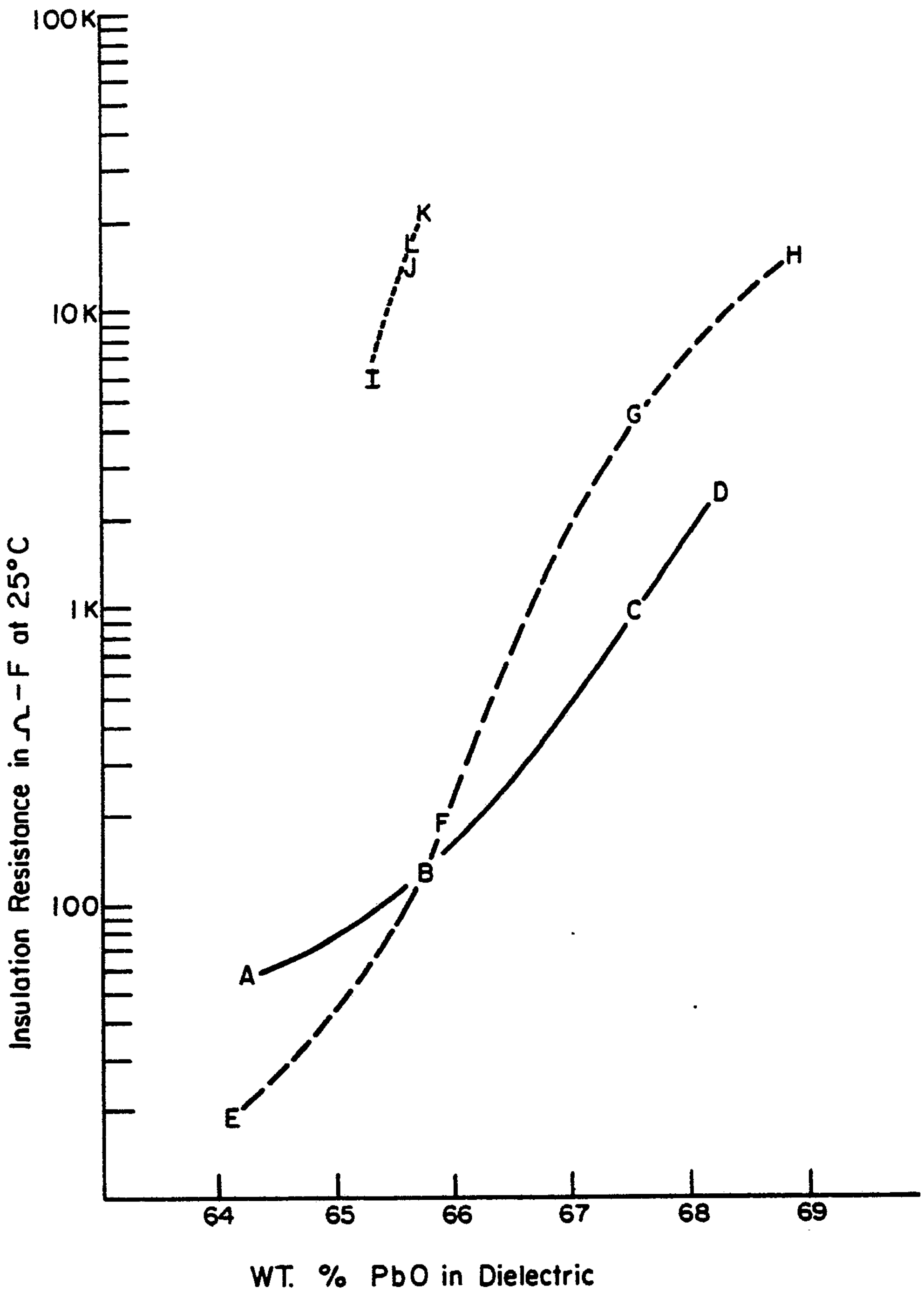
100K
10K
1K
100
Insulation Resistance in Ω-F at 25°C
K
L
J
I
H
G
D
C
F
B
A
E
64
65
66
67
68
69
WT. % PbO in Dielectric

FIG. 2b

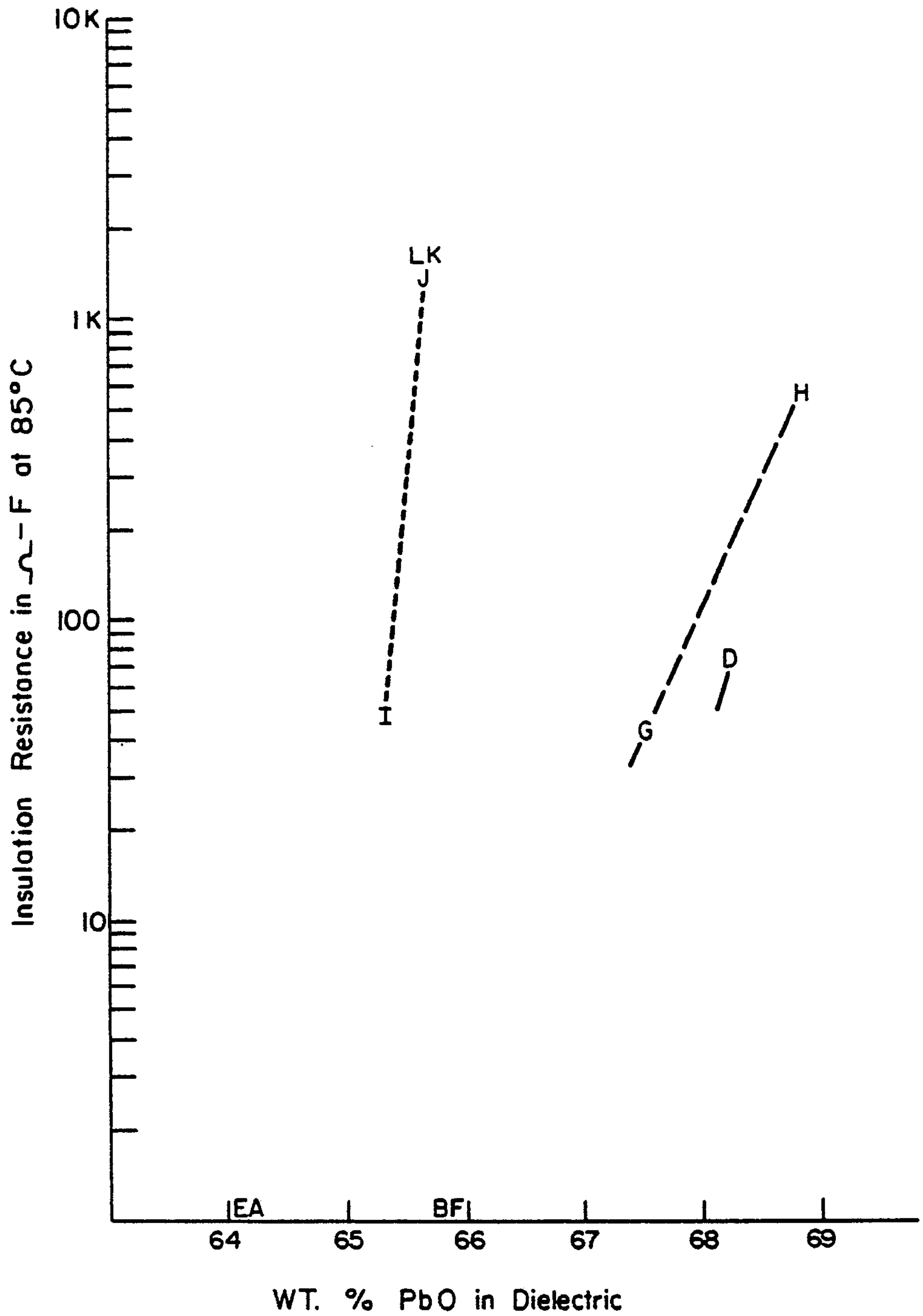
10K
1K
100
10
Insulation Resistance in Ω-F at 85°C
LK
J
I
H
D
G
EA
BF
64
65
66
67
68
69
WT. % PbO in Dielectric

FIG. 2c

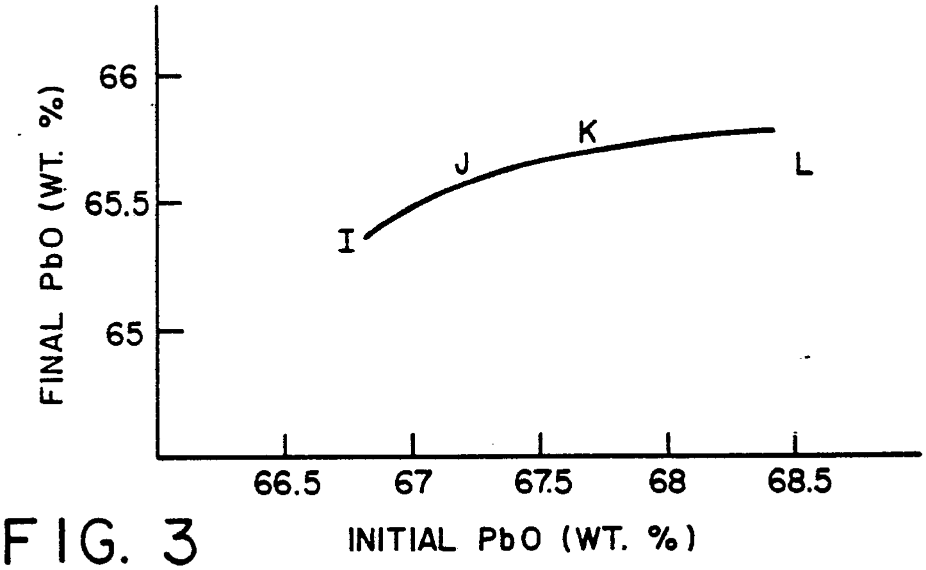
66
65.5
65
FINAL PbO (WT. %)
I
J
K
L
66.5
67
67.5
68
68.5
INITIAL PbO (WT. %)

FIG. 3

FIG. 5

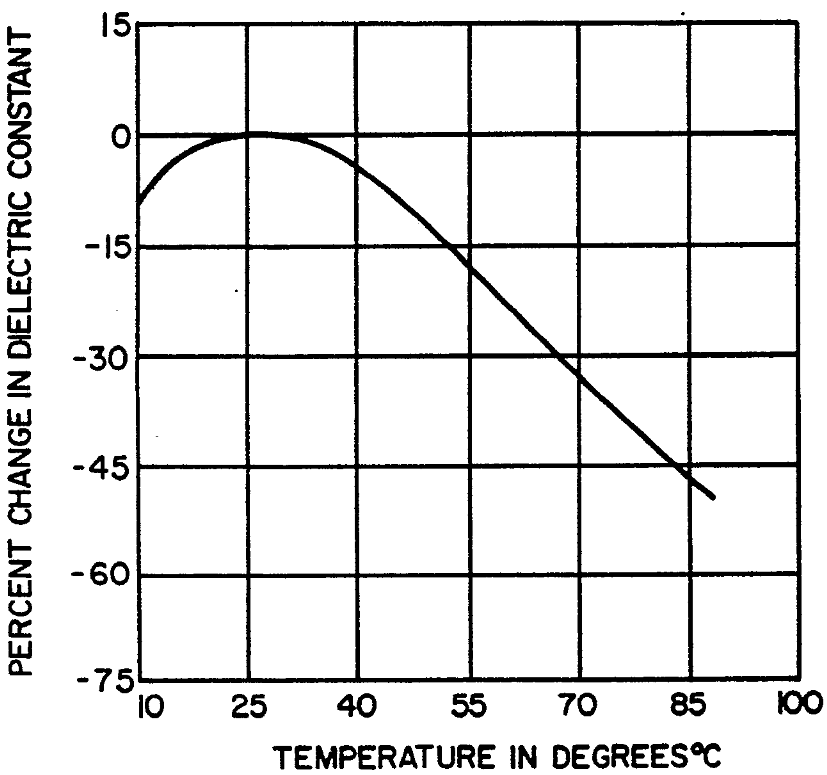
15
0
-15
-30
-45
-60
-75
PERCENT CHANGE IN DIELECTRIC CONSTANT
10
25
40
55
70
85
100
TEMPERATURE IN DEGREES °C

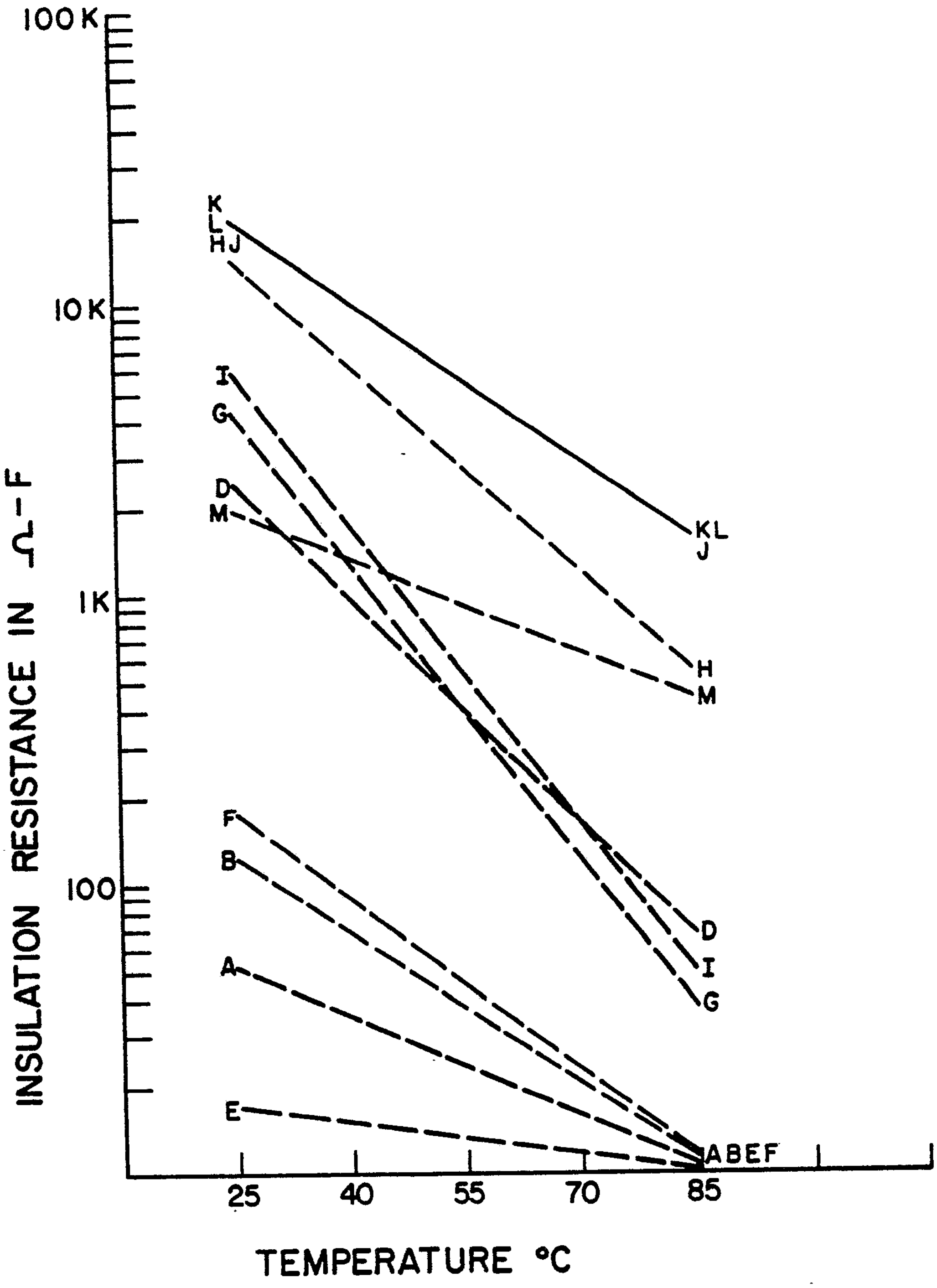

100 K
10 K
1 K
100
INSULATION RESISTANCE IN Ω-F
K
L
HJ
I
G
D
M
F
B
A
E
KL
J
H
M
D
I
G
ABEF
25
40
55
70
85
TEMPERATURE °C


FIG. 4